# EUROPEAN PATENT SPECIFICATION

(11) **EP 4 560 939 B1**
(45) Date of publication and mention of the grant of the patent: **18.03.2026**
(21) Application number: 23211036.1
(22) Date of filing: 21.11.2023
(51) Int. Cl.: H04B 10/272, H04B 10/69, H04Q 11/00

(54) **CIRCUIT FOR CONNECTING OPTICAL FIBER FOR DIFFERENT OPTICAL COMMUNICATION STANDARDS AND METHOD FOR OPERATING THE SAME**
SCHALTUNG ZUM VERBINDEN VON LICHTWELLENLEITERN FÜR UNTERSCHIEDLICHE OPTISCHE KOMMUNIKATIONSSTANDARDS UND VERFAHREN ZUM BETRIEB DAVON
CIRCUIT DE CONNEXION DE FIBRE OPTIQUE POUR DIFFÉRENTS STANDARDS DE COMMUNICATION OPTIQUE ET SON PROCÉDÉ DE FONCTIONNEMENT

(43) Date of publication of application: 28.05.2025
(73) Proprietor: Askey Computer Corp., New Taipei City 235 (TW)
(72) Inventor: Li, Chih-Ping, New Taipei City 235 (TW)
(74) Representative: DTS Patent- und Rechtsanwälte PartmbB

(56) References cited:
- EP-A1- 3 065 314
- EP-A1- 3 723 383
- US-A1- 2010 226 649
- US-A1- 2011 229 131
- US-A1- 2014 219 660

## Description

### BACKGROUND OF THE INVENTION

### 1. Field of the Invention

The present disclosure relates generally to a circuit for connecting optical fiber for different optical communication standards and a method for operating the same.

### 2. Description of the Related Art

Fiber optics is a communicating method of information transmission. Different optical communication standards such as GPON or XGPON are widely used to provide point to multipoint network to deliver broadband access to the end user via optical fiber cable. The efficient integration and automatic signal switch control of different optical communication standards at user end are needed.

Document EP 3 065 314 A1 discloses a passive optical network comprising an OLT configured to receive optical signals according to two different communication standards, comprising means for splitting the optical signals based on the wavelength and means for forwarding the split signals to corresponding receiving modules.

Document US 2011/0229131 A1 discloses a passive optical network comprising an ONT with optical transceivers and some common electrical paths between two different communication standards (EPON, GPON).

### BRIEF SUMMARY OF THE INVENTION

Aspects and advantages of embodiments of the present disclosure will be set forth in part in the following description, or may be learned from the description, or may be learned through practice of the embodiments.

One example aspect of the present disclosure is directed to a circuit for connecting optical fiber for different optical communication standards is provided, the circuit is suitable for connecting a local optical communicating device to an external optical network. The circuit includes an optical-electrical module, a first amplifying module, a second amplifying module, a detection module, a multiplexer and a processor.

**In** some embodiments, the optical-electrical module connects to the external optical network to convey the optical signal via optical fiber. The optical-electrical module is configured to receive a light signal from the external optical network and split the light signal into a first optical signal complying with a first optical communication standard and a second optical signal complying with a second optical communication standard based on the different wavelength of the light signal. The optical-electrical module is configured to convert the first optical signal and the second optical signal into a first data signal and a second data signal separately, and then output the first data signal and the second data signal from different output ports of the optical-electrical module, where the first data signal and the second data signal are in form of electrical signal. Both splitting and converting are implemented by the optical-electrical module. In some embodiments, the optical signal and said light signal might be different wavelengths of different optical communication standards.

In some embodiments, the first amplifying module connects to the optical-electrical module. The first amplifying module is configured to amplify the first data signal and present a first state signal ST1 based on the first data signal. In some embodiments, once the first amplifying module received the first data signal from the optical-electrical module, the first amplifying module generates and presents the first state signal in a pin of the first amplifying module. In some embodiments, the second amplifying module connects to the optical-electrical module. The second amplifying module is configured to amplify the second data signal and present a second state signal based on the second data signal. In some embodiments, once the second amplifying module received the second data signal from the optical-electrical module, the second amplifying module generates and presents the second state signal in a pin of the second amplifying module.

In some embodiments, the detection module connects to the first amplifying module and the second amplifying module. The detection module is configured to generate a control signal to control a downstream element based on a detection result, wherein the detection result determined by the first state signal and the second state signal from the pin of the first amplifying module and the second amplifying module. In some embodiments, for example, when the first amplifying module receives the first data signal, the first amplifying module presents a pull-up state signal, and the detection result is "first data signal-on" accordingly. Then, the detection module generates a control signal indicating "first data signal-on" to a downstream element to control the said downstream element to turn on the reception of first data signal accordingly. Similarly, the control signal indicating "second data signal-on" when the second amplifying module received the second data signal, and then the detection module controls the downstream element to receive the second data signal accordingly. In some embodiments, the pull-up, pull-down, enable or disable of state signal could be exchanged. For example, the control signal could indicate "first data signal-on" when the state signal is disable. In some embodiments, the detection module could set a default detection result and following default control signal to determine which path of data signal could be received when both the state signals are in same state. In some embodiments, the control signal controls the multiplexer to output the second data signal when both the first state signal and the second state signal indicate the presence of both the first data signal and the second data signal. In some embodiments, the detection module could be implemented by a logic IC, logic circuit or any other similar module to identify the enable/disable state signal.

In some embodiments, the multiplexer connects to the detection module and the first amplifying module and the second amplifying module. The multiplexer is configured to situate as the downstream element of the detection module and output the first data signal or the second data signal selectively based on the control signal as mentioned above, and the control signal determines the switch (turn on/off) of the first data signal or the second data signal at the multiplexer according to the state signals.

In some embodiments, the processor connects to the multiplexer and is configured to receive the first data signal or the second data signal which are selected by the detection module via the multiplexer. Also, the processor is capable of processing both the first data signal and the second data signal. In some embodiments, the processor connects to a local optical communicating device, such as scriber device or computer, server, etc. In some embodiments, the processor could be a system-on-chip (SoC).

In some embodiments, the first optical communication standard is the GPON optical communication standard and the second optical communication standard is the XGPON optical communication standard.

In some embodiments, the first amplifying module further integrated with a first laser diode driver, and wherein the second amplifying module further integrated with a second laser diode driver.

In some embodiments, the optical-electrical module is a bidirectional optical sub-assembly (BOSA) or Combo BOSA / QOSA.

In some embodiments, wherein the control signal controls the multiplexer to output the second data signal when both the first state signal and the second state signal indicate the presence of both the first data signal and the second data signal.

In some embodiments, wherein the first state signal indicates the presence of the first data signal by pulling low its voltage level.

Another example aspect of the present disclosure is directed to a method for connecting optical fiber for different optical communication standards. The method includes: receiving, by an optical-electrical module, a light signal from an external network; splitting, by the optical-electrical module, the light signal into a first optical signal and a second optical signal based on the different wavelength of the light signal; converting, by the optical-electrical module, the first optical signal and the second optical signal into a first data signal and a second data signal separately; and controlling, by a detection module, a multiplexer to output the first data signal or the second data signal selectively based on a detection result according to a first state signal and a second state signal, wherein the first state signal indicating the presence of the first data signal and the second state signal indicating the presence of the second data signal.

According to the embodiments of the present disclosure, the circuit and the method can control and switch a GPON receiving mode or a XGPON receiving mode automatically based on the optical signals from the optical fiber by using a detection module situated upstream from a multiplexer. Based on the hardware feature of the detection module and the feature of independent arrangement of the detection module, it also simplifies the design of said connecting circuit. The circuit and the method significantly increase the flexibility of the local optical communicating device.

These and other features, aspects and advantages of various embodiments will become better understood with reference to the following description and appended claims. The accompanying drawings, which are incorporated in and constitute a part of this specification, illustrate embodiments of the present disclosure, and together with the description, serve to explain the related principles.

### BRIEF DESCRIPTION OF THE DRAWINGS

FIG. 1 illustrates a schematic diagram of the circuit for connecting optical fiber for different optical communication standards, according to some embodiments.
FIG. 2 illustrates a schematic diagram of the circuit for connecting optical fiber for different optical communication standards, according to some embodiments.
FIG. 3 illustrates a schematic diagram of the circuit for connecting optical fiber for different optical communication standards, according to some embodiments.

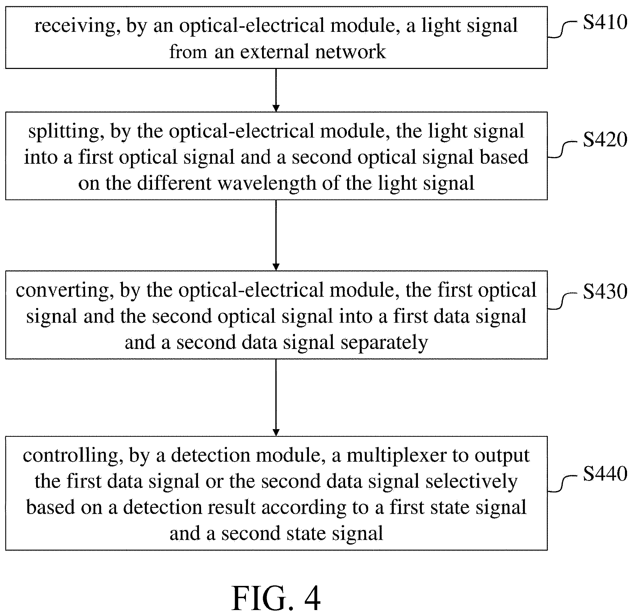

FIG. 4 illustrates a flow chart of a method for connecting optical fiber for different optical communication standards, according to some embodiments.

### DETAILED DESCRIPTION OF THE INVENTION

To facilitate understanding of the object, characteristics and effects of this present disclosure, embodiments together with the attached drawings for the detailed description of the present disclosure are provided.

In the present disclosure, the circuit for connecting optical fiber for different optical communication standards and the method for operating the same are provided. The circuit and the method can control and switch the receiving mode for different optical communication standards automatically based on the optical signals from the optical fiber by using a detection module situated upstream from a multiplexer.

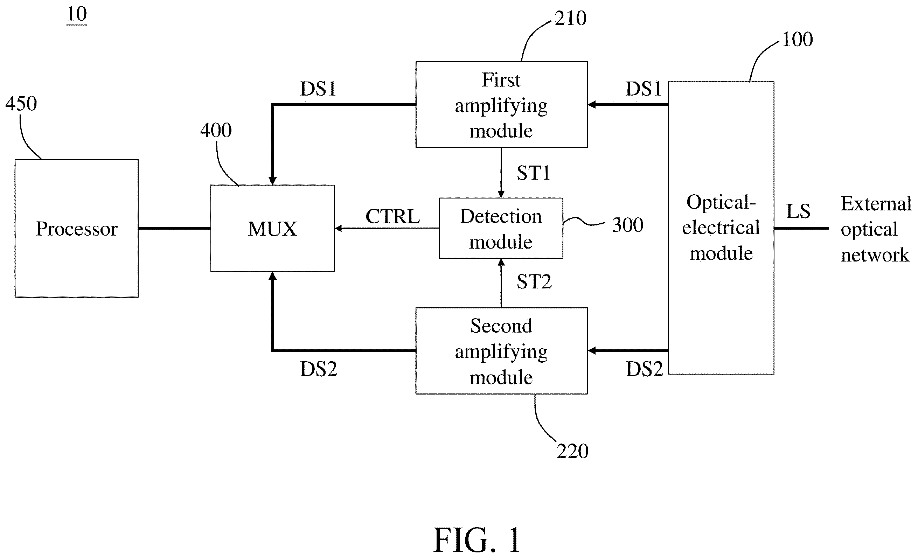

FIG. 1 illustrates a schematic diagram of the circuit for connecting optical fiber for different optical communication standards. The circuit 10 is configured for connecting optical fiber for different optical communication standards, and suitable for connecting a local optical communicating device to an external optical network. The circuit 10 includes an optical-electrical module 100, a first amplifying module 210, a second amplifying module 220, a detection module 300, a multiplexer 400 and a processor 450.

Referring to FIG. 1, the optical-electrical module 210 connects to the external optical network to convey the optical signal via optical fiber. The optical-electrical module 210 is configured to receive a light signal LS from the external optical network and split the light signal LS into a first optical signal complying with a first optical communication standard and a second optical signal complying with a second optical communication standard based on the different wavelength of the light signal. The optical-electrical module 210 is configured to convert the first optical signal and the second optical signal into a first data signal DS1 and a second data signal DS2 separately, and then output the first data signal DS1 and the second data signal DS2 from different output ports of the optical-electrical module 210, where the first data signal DS1 and the second data signal DS2 are in form of electrical signal. Both splitting and converting are implemented by the optical-electrical module 210. In the present invention, said light signal LS comprises a first optical signal component complying with a first optical communication standard and a second optical signal component complying with a second optical communication standard, and said first and second components have different wavelengths.

Referring to FIG. 1, the first amplifying module 210 connects to the optical-electrical module 100. The first amplifying module 210 is configured to amplify the first data signal DS1 and present a first state signal ST1 based on the first data signal DS1. In some embodiments, once the first amplifying module 210 received the first data signal DS1 from the optical-electrical module 100, the first amplifying module 210 generates and presents the first state signal ST1 in a pin of the first amplifying module 210.

Similarly, the second amplifying module 220 connects to the optical-electrical module 100. The second amplifying module 220 is configured to amplify the second data signal DS2 and present a second state signal ST2 based on the second data signal DS2. In some embodiments, once the second amplifying module 220 received the second data signal DS2 from the optical-electrical module 100, the second amplifying module 220 generates and presents the second state signal ST2 in a pin of the second amplifying module 220.

Referring to FIG. 1, the detection module 300 connects to the first amplifying module 210 and the second amplifying module 220. The detection module 300 is configured to generate a control signal CTRL to control a downstream element based on a detection result, wherein the detection result determined by the first state signal ST1 and the second state signal ST2 from the pin of the first amplifying module 210 and the second amplifying module 220. In some embodiments, for example, when the first amplifying module 210 receives the first data signal DS1, the first amplifying module 210 presents a pull-up state signal ST1 (ST1 enable), and the detection result is "DS1-on" accordingly. Then, the detection module 300 generates a control signal CTRL indicating "DS1-on" to a downstream element to control the said downstream element to turn on the reception of first data signal DS1 accordingly. Similarly, the control signal CTRL indicating "DS2-on" when the second amplifying module 220 received the second data signal DS2, and then the detection module 300 control the downstream element to receive the second data signal DS2 accordingly. In some embodiments, the pull-up, pull-down, enable or disable of state signal ST1, ST2 could be exchanged. For example, the control signal CRTL could indicate "DS1-on" when the state signal ST1 is disable. In some embodiments, the detection module 300 could set a default detection result and following default control signal CTRL to determine which path of data signal could be received when both the state signal ST1, ST2 are in same state, for example, in some embodiments, the control signal CTRL controls the multiplexer 400 to output the second data signal DS2 when both the first state signal ST1 and the second state signal ST2 indicate the presence of both the first data signal DS1 and the second data signal DS2. In some embodiments, the detection module 300 could be implemented by a logic IC, logic circuit or any other similar module to identify the enable/disable state signal.

Referring to FIG. 1, the multiplexer (MUX) 400 connects to the detection module 300 and the first amplifying module 210 and the second amplifying module 220. The multiplexer 400 is configured to situate as the downstream element of the detection module 300 and receive the first data signal DS1 or the second data signal DS2 selectively based on the control signal CTRL as mentioned above, and the control signal CTRL determines the switch (turn on/off) of reception of the first data signal DS1 or the second data signal DS2 according to the state signals ST1, ST2.

Referring to FIG. 1, the processor 450 connects to the multiplexer 400 and is configured to output the first data signal DS1 or the second data signal DS2 which are selected by the detection module 300 via the multiplexer 400. Also, the processor 450 is capable of processing both the first data signal DS1 and the second data signal DS2. In some embodiments, the processor 450 connects to a local optical communicating device, such as scriber device or computer, server, etc. In some embodiments, the processor 450 could be a system-on-chip (SoC).

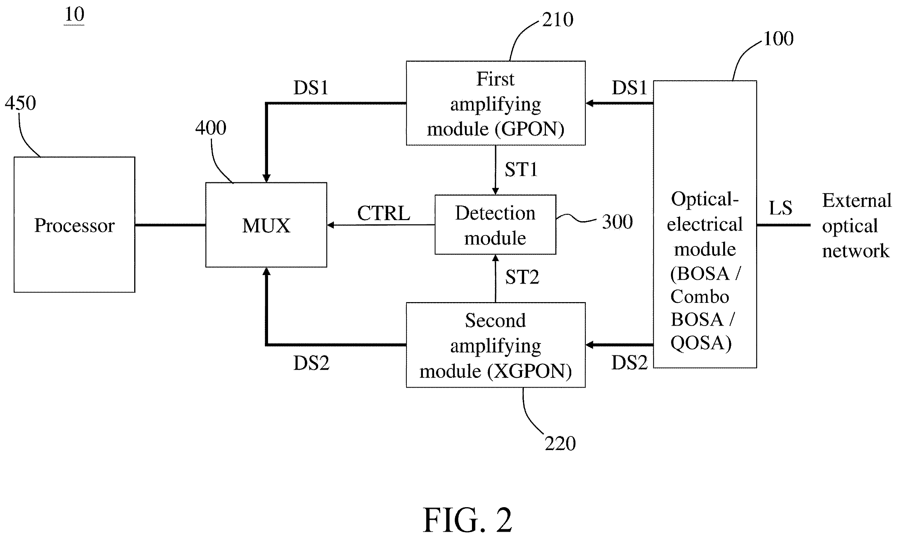

FIG. 2 illustrates a schematic diagram of the circuit for connecting optical fiber for different optical communication standards. In some embodiments, the optical communication standards include the GPON (Gigabit-capable Passive Optical Network) standard and the XGPON (10-Gigabit-capable Passive Optical Network) standard. In some embodiments, the first optical communication standard is the GPON standard, and the second optical communication standard is the XGPON standard. The first data signal DS1 is thus in form of GPON standard and the second data signal DS2 is in form of XGPON standard. The circuit 10 and the optical-electrical module 100 are capable of receiving both the GPON and the XGPON optical signals. Also, the processor 450 is capable of processing both the GPON signals and the XGPON signals. In some embodiments, the optical-electrical module 210 is a bidirectional optical sub-assembly (BOSA) or combo BOSA. In some embodiments, the BOSA includes an optical splitter such as grating to split the light signal into different optical signal based on different wavelength (e.g., the wavelength of GPON or XGPON optical signal) and also optical-electrical interface to convert the optical signal into electrical signal. In some embodiments, the BOSA could be referred to the reference PQ430046 from the manufacturer POTRON.

Referring to FIG. 2, in some embodiments, the light signals LS received from the optical fiber are split at the combo BOSA based on the different wavelengths of the GPON and the XGPON signals. The light signals LS are then converted into electronic signals (e.g., first data signal DS1 and second data signal DS2) at combo BOSA respectively, and are output by combo BOSA at different output ports. In some embodiments, for example, the first data signal DS1 is GPON signal and the second data signal DS2 is XGPON signal, the GPON electrical signals (first data signal DS1) are output from the upper port to the first amplifying module 210 for GPON signals, and the XGPON electrical signals (second data signal DS2) are output from the lower port to the second amplifying module 220 for XGPON signals. In some embodiments, both of the first amplifying module 210 and the second amplifying module 220 have lost-of-signals pins, LOS_GPON (now shown) and LOS_XGPON (now shown), respectively. In some embodiments, the first state signal indicates the presence of the first data signal by pulling low its voltage level. For example, the LOS_GPON pin of the first amplifying module 210 is pulled down (indicated by the first state signal ST1) when the GPON signals (first data signal DS1) are received by the first amplifying module 210, and the LOS_XGPON pin of the second amplifying module 220 is pulled down (indicated by the second state signal ST2) when the XGPON signals (second data signal DS2) are received by the second amplifying module 220. The LOS_GPON pin (indicating the first state signal ST1) and the LOS_XGPON pin (indicating the second state signal ST2) are connected with the detection module 300, which controls the multiplexer 400 to receive the GPON signals from the first amplifying module 210 or receive the XGPON signals from the second amplifying module 220. In some embodiments, for example, when the LOS_XGPON pin of the second amplifying module 220 is low, the detection module 300 will send a control signal CTRL indicating "XGPON-on" to the multiplexer 400 and control the multiplexer 400 to receive XGPON signals from the second amplifying module 220. In some embodiments, when the LOS_XGPON pin (of the second amplifying module 220) is high and the LOS_GPON pin (of the first amplifying module 210) is low, the detection module 300 will control and switch the multiplexer 400 to receive the GPON signals from the first amplifying module 210. The table 1 below shows the truth table of detection result and control signal CTRL of the detection module 300 during normal operation, according to some embodiments.

**[Table 1]**

| LOS_GPON (first state signal ST1) | LOS_XGPON (second state signal ST2) | Detection result (Mode) | Control signal CTRL |
|---|---|---|---|
| 0 | 0 | XGPON | "XGPON-on" ("DS2-on") |
| 1 | 0 | XGPON | "XGPON-on" ("DS2-on") |
| 0 | 1 | GPON | "GPON-on" ("DS1-on") |
| 1 | 1 | No signal | No signal |

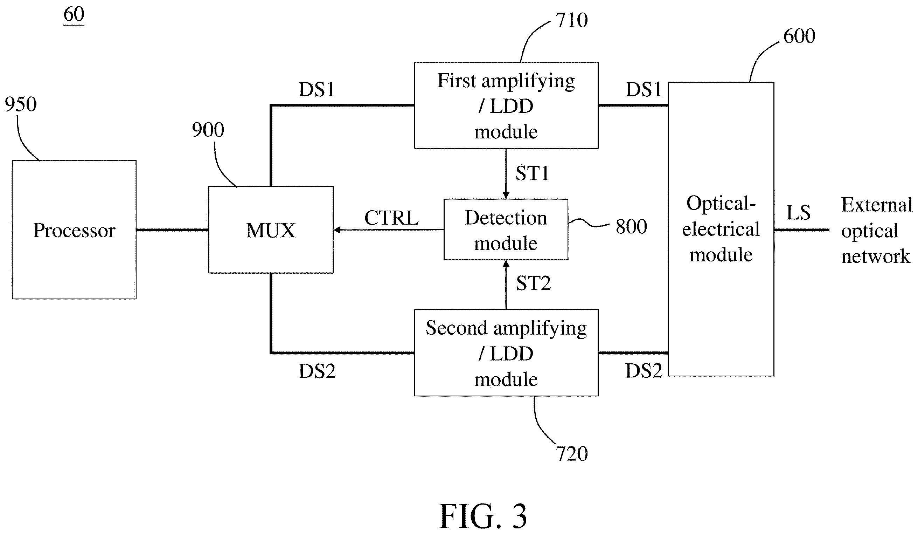

FIG. 3 illustrates a schematic diagram of the circuit for connecting optical fiber for different optical communication standards. In some embodiments, the first amplifying module further integrates with a first laser diode driver (LDD) and acts as a first amplifying/LDD module 710, and the second amplifying module further integrates with a second laser diode driver and acts as a second amplifying/LDD module 720. With the integrated first and second amplifying/LDD module 710 and 720, the circuit 60 is capable of receiving light signals from the external optical network by the optical-electrical module 600 and controlling the reception of data signals DS1, DS2 for the multiplexer 900 by the detection module 800, the circuit 60 is also capable of transmitting optical signal by the laser diode driver of the first and second amplifying/LDD module 710 and 720. Accordingly, the circuit 60 is capable of connecting, which including receiving selectively and transmitting, optical fiber for different optical communication standards. In some embodiments, the first and second amplifying/LDD module could be referred to the reference 'EN7573 series' and processor 'EN7580 series' from the manufacturer AIROHA.

Another example aspect of the present disclosure is directed to a method for connecting optical fiber for different optical communication standards. The method includes operation S410 to S440. In S410, receiving, by an optical-electrical module, a light signal from an external network. In S420, splitting, by the optical-electrical module, the light signal into a first optical signal and a second optical signal based on the different wavelength of the light signal. In S430, converting, by the optical-electrical module, the first optical signal and the second optical signal into a first data signal and a second data signal separately. In S440, controlling, by a detection module, a multiplexer to output the first data signal or the second data signal selectively based on a detection result according to a first state signal and a second state signal, wherein the first state signal indicating the presence of the first data signal and the second state signal indicating the presence of the second data signal.

According to the embodiments of the present disclosure, the circuit for connecting optical fiber for different optical communication standards and the method for operating the same are provided. The circuit and the method can control and switch a GPON receiving mode or a XGPON receiving mode automatically based on the optical signals from the optical fiber by using a detection module situated upstream from a multiplexer. The hardware feature of the detection module and the feature of independent arrangement of the detection module also simplify the design of said connecting circuit. The circuit and the method significantly increase the flexibility of the local optical communicating device.

The present disclosure is described by way of the multiple embodiments above. A person skilled in the art should understand that, these embodiments are merely for describing the present disclosure are not to be construed as limitations to the scope of the present disclosure. It should be noted that all equivalent changes, replacements and substitutions made to the embodiments are to be encompassed within the scope of the present disclosure. Therefore, the scope of protection of the present disclosure should be accorded with the broadest interpretation of the appended claims.

## Claims

1. A circuit (10, 60) suitable for connecting a local optical communicating device to an external optical network, the circuit (10) comprising:
an optical-electrical module (100), connected to the external optical network, configured to receive a light signal (LS) from the external optical network, said light signal (LS) comprising a first optical signal component complying with a first optical communication standard and a second optical signal component complying with a second optical communication standard, wherein said first and second components have different wavelengths, and wherein the module is configured to split the light signal into its optical signal components based on their respective different wavelengths and to convert the first optical signal and the second optical signal into a first data signal (DS1) and a second data signal (DS2) separately;
a first amplifying module (210), connected to the optical-electrical module (100), configured to amplify the first data signal (DS1) and generate a first state signal (ST1) indicating the presence of the first data signal (DS1);
a second amplifying module (220), connected to the optical-electrical module (100), configured to amplify the second data signal (DS2) and generate a second state signal (ST2) indicating the presence of the second data signal (DS2);
a detection module (300), connected to the first amplifying module (210) and the second amplifying module (220), configured to generate a control signal (CTRL) based on the first state signal (ST1) and the second state signal (ST2);
a multiplexer (400), connected to the detection module (300) and the first amplifying module (210) and the second amplifying module (220), the multiplexer (400) configured to output the first data signal (DS1) or the second data signal (DS2) selectively based on the control signal (CTRL);
a processor (450), connected to the multiplexer (400), configured to receive the first data signal (DS1) or the second data signal (DS2) selected by the multiplexer (400), and capable of processing both the first data signal (DS1) and the second data signal (DS2).

2. The circuit (10) according to claim 1, wherein the first optical communication standard is the GPON optical communication standard and the second optical communication standard is the XGPON optical communication standard.

3. The circuit (60) according to claim 1, wherein the first amplifying module (210) further integrated with a first laser diode driver (710), and wherein the second amplifying module (220) further integrated with a second laser diode driver (720).

4. The circuit (10) according to claim 1, wherein the optical-electrical module (100) is a bidirectional optical sub-assembly (BOSA) or Combo BOSA / QOSA.

5. The circuit (10) according to claim 1, wherein the control signal (CTRL) controls the multiplexer (400) to output the second data signal (DS2) when both the first state signal (ST1) and the second state signal (ST2) indicate the presence of both the first data signal (DS1) and the second data signal (DS2).

6. The circuit (10) according to claim 1, wherein the first state signal (ST1) indicates the presence of the first data signal (DS1) by pulling low its voltage level.

7. A method for connecting optical fiber for different optical communication standards, the method comprising:
receiving, by an optical-electrical module (100), a light signal (LS) from an external network (S410), said light signal (LS) comprising a first optical signal component complying with a first optical communication standard and a second optical signal component complying with a second optical communication standard, wherein said first and second components have different wavelengths;
splitting, by the optical-electrical module (100), the light signal (LS) into its optical signal components based on their respective different wavelengths (S420);
converting, by the optical-electrical module (100), the first optical signal and the second optical signal into a first data signal (DS1) and a second data signal (DS2) separately (S430); and
controlling, by a detection module (300), a multiplexer (400) to output the first data signal (DS1) or the second data signal (DS2) selectively based on a detection result according to a first state signal (ST1) and a second state signal (ST2), generated by respective electrical amplifiers,
wherein the first state signal (ST1) indicating the presence of the first data signal (DS1) and the second state signal (ST2) indicating the presence of the second data signal (DS2) (S440).

## Patentansprüche

1. Schaltung (10, 60), die zum Verbinden einer lokalen optischen Kommunikationsvorrichtung mit einem externen optischen Netzwerk geeignet ist, wobei die Schaltung (10) aufweist:
ein optisch-elektrisches Modul (100), das mit dem externen optischen Netzwerk verbunden und dafür ausgelegt ist, ein Lichtsignal (LS) von dem externen optischen Netzwerk zu empfangen, wobei das Lichtsignal (LS) eine erste optische Signalkomponente, die einem ersten optischen Kommunikationsstandard entspricht, und eine zweite optische Signalkomponente aufweist, die einem zweiten optischen Kommunikationsstandard entspricht, wobei die erste und zweite Komponente unterschiedliche Wellenlängen haben, und wobei das Modul dafür ausgelegt ist, das Lichtsignal basierend auf seinen jeweiligen unterschiedlichen Wellenlängen in seine optischen Signalkomponenten aufzuspalten und das erste optische Signal und zweite optische Signal separat in ein erstes Datensignal (DS1) und ein zweites Datensignal (DS2) umzuwandeln;
ein erstes Verstärkungsmodul (210), das mit dem optisch-elektrischen Modul (100) verbunden und dafür ausgelegt ist, das erste Datensignal (DS1) zu verstärken und ein erstes Zustandssignal (ST1) zu erzeugen, welches das Vorhandensein des ersten Datensignals (DS1) angibt;
ein zweites Verstärkungsmodul (220), das mit dem optisch-elektrischen Modul (100) verbunden und dafür ausgelegt ist, das zweite Datensignal (DS2) zu verstärken und ein zweites Zustandssignal (ST2) zu erzeugen, welches das Vorhandensein des zweiten Datensignals (DS2) angibt;
ein Erfassungsmodul (300), das mit dem ersten Verstärkungsmodul (210) und zweiten Verstärkungsmodul (220) verbunden und dafür ausgelegt ist, basierend auf dem ersten Zustandssignal (ST1) und zweiten Zustandssignal (ST2) ein Steuersignal (CTRL) zu erzeugen;
ein Multiplexer (400), der mit dem Erfassungsmodul (300) sowie mit dem ersten Verstärkungsmodul (210) und zweiten Verstärkungsmodul (220) verbunden ist, wobei der Multiplexer (400) dafür ausgelegt ist, basierend auf dem Steuersignal (CTRL) selektiv das erste Datensignal (DS1) oder zweite Datensignal (DS2) auszugeben;
einen Prozessor (450), der mit dem Multiplexer (400) verbunden und dafür ausgelegt ist, das erste Datensignal (DS1) oder zweite Datensignal (DS2) zu empfangen, die vom Multiplexer (400) ausgewählt sind, und der in der Lage ist, sowohl das erste Datensignal (DS1) als auch das zweite Datensignal (DS2) zu verarbeiten.

2. Schaltung (10) nach Anspruch 1, wobei der erste optische Kommunikationsstandard dem optischen GPON-Kommunikationsstandard und der zweite optische Kommunikationsstandard dem optischen XGPON-Kommunikationsstandard entspricht.

3. Schaltung (60) nach Anspruch 1, wobei das erste Verstärkungsmodul (210) ferner mit einem ersten Laserdiodentreiber (710) und das zweite Verstärkungsmodul (220) ferner mit einem zweiten Laserdiodentreiber (720) integriert ist.

4. Schaltung (10) nach Anspruch 1, wobei es sich bei dem optisch-elektrischen Modul (100) um eine bidirektionale optische Teilbaugruppe (BOSA) oder eine Combo BOSA / QOSA handelt.

5. Schaltung (10) nach Anspruch 1, wobei das Steuersignal (CTRL) den Multiplexer (400) steuert, um das zweite Datensignal (DS2) auszugeben, wenn sowohl das erste Zustandssignal (ST1) als auch das zweite Zustandssignal (ST2) das Vorhandensein von sowohl dem ersten Datensignal (DS1) als auch zweiten Datensignal (DS2) angeben.

6. Schaltung (10) nach Anspruch 1, wobei das erste Zustandssignal (ST1) das Vorhandensein des ersten Datensignals (DS1) angibt, indem es sein Spannungsniveau auf Tiefpegel zieht.

7. Verfahren zum Verbinden optischer Fasern für unterschiedliche optische Kommunikationsstandards, wobei das Verfahren umfasst:
Empfangen, durch ein optisch-elektrisches Modul (100), eines Lichtsignals (LS) von einem externen Netzwerk (S410), wobei das Lichtsignal (LS) eine erste optische Signalkomponente, die einem ersten optischen Kommunikationsstandard entspricht, und eine zweite optische Signalkomponente aufweist, die einem zweiten optischen Kommunikationsstandard entspricht, wobei die erste und zweite Komponente unterschiedliche Wellenlängen haben;
Aufspalten, durch das optisch-elektrische Modul (100), des Lichtsignals (LS) in seine optischen Signalkomponenten basierend auf deren jeweiligen unterschiedlichen Wellenlängen (S420);
separates Umwandeln, durch das optisch-elektrische Modul (100), des ersten optischen Signals und zweiten optischen Signals in ein erstes Datensignal (DS1) und ein zweites Datensignal (DS2) (S430); und
Steuern, durch ein Erfassungsmodul (300), eines Multiplexers (400) zur selektiven Ausgabe des ersten Datensignals (DS1) oder zweiten Datensignals (DS2) basierend auf einem Erfassungsergebnis gemäß einem ersten Zustandssignal (ST1) und einem zweiten Zustandssignal (ST2), die von jeweiligen elektrischen Verstärkern erzeugt werden,
wobei das erste Zustandssignal (ST1) das Vorhandensein des ersten Datensignals (DS1) und das zweite Zustandssignal (ST2) das Vorhandensein des zweiten Datensignals (DS2) angibt (S440).

## Revendications

1. Circuit (10, 60) adapté pour connecter un dispositif de communication optique local à un réseau optique externe, le circuit (10) comprenant :
un module opto-électrique (100) connecté au réseau optique externe et conçu pour recevoir un signal lumineux (LS) provenant du réseau optique externe, le signal lumineux (LS) comprenant une première composante de signal optique correspondant à une première norme de communication optique et une deuxième composante de signal optique correspondant à une deuxième norme de communication optique, les première et deuxième composantes ayant des longueurs d'onde différentes, et le module étant conçu pour diviser le signal lumineux en ses composants de signal optique en fonction de leurs différentes longueurs d'onde respectives et pour convertir séparément le premier signal optique et le deuxième signal optique en un premier signal de données (DS1) et un deuxième signal de données (DS2) ;
un premier module d'amplification (210) connecté au module opto-électrique (100) et conçu pour amplifier le premier signal de données (DS1) et générer un premier signal d'état (ST1) indiquant la présence du premier signal de données (DS1) ;
un deuxième module d'amplification (220) connecté au module opto-électrique (100) et conçu pour amplifier le deuxième signal de données (DS2) et générer un deuxième signal d'état (ST2) indiquant la présence du deuxième signal de données (DS2) ;
un module de détection (300) connecté au premier module d'amplification (210) et au deuxième module d'amplification (220) et conçu pour générer un signal de commande (CTRL) sur la base du premier signal d'état (ST1) et du deuxième signal d'état (ST2) ;
un multiplexeur (400) connecté au module de détection (300) ainsi qu'au premier module d'amplification (210) et au deuxième module d'amplification (220), le multiplexeur (400) étant conçu pour délivrer de manière sélective le premier signal de données (DS1) ou le deuxième signal de données (DS2) sur la base du signal de commande (CTRL) ;
un processeur (450) relié au multiplexeur (400) et conçu pour recevoir le premier signal de données (DS1) ou le deuxième signal de données (DS2) sélectionné par le multiplexeur (400), et capable de traiter à la fois le premier signal de données (DS1) et le deuxième signal de données (DS2).

2. Le circuit (10) selon la revendication 1, sachant que la première norme de communication optique correspond à la norme de communication optique GPON et la deuxième norme de communication optique correspond à la norme de communication optique XGPON.

3. Le circuit (60) selon la revendication 1, sachant que le premier module d'amplification (210) est en outre intégré à un premier circuit d'attaque de diode laser (710) et le deuxième module d'amplification (220) est en outre intégré à un deuxième circuit d'attaque de diode laser (720).

4. Le circuit (10) selon la revendication 1, sachant que le module opto-électrique (100) est un sous-ensemble optique bidirectionnel (BOSA) ou un combo BOSA / QOSA.

5. Le circuit (10) selon la revendication 1, sachant que le signal de commande (CTRL) commande le multiplexeur (400) afin d'émettre le deuxième signal de données (DS2) lorsque le premier signal d'état (ST1) et le deuxième signal d'état (ST2) indiquent la présence du premier signal de données (DS1) et du deuxième signal de données (DS2).

6. Le circuit (10) selon la revendication 1, sachant que le premier signal d'état (ST1) indique la présence du premier signal de données (DS1) en abaissant son niveau de tension à un niveau bas.

7. Procédé de connexion de fibres optiques pour différentes normes de communication optique, le procédé comprenant :
la réception, par un module opto-électrique (100), d'un signal lumineux (LS) provenant d'un réseau externe (S410), le signal lumineux (LS) comportant une première composante de signal optique correspondant à une première norme de communication optique et une deuxième composante de signal optique correspondant à une deuxième norme de communication optique, les première et deuxième composantes ayant des longueurs d'onde différentes ;
la séparation, par le module opto-électrique (100), du signal lumineux (LS) en ses composantes de signal optique sur la base de leurs longueurs d'onde respectives différentes (S420) ;
le fait de convertir séparément, par le module opto-électrique (100), le premier signal optique et le deuxième signal optique en un premier signal de données (DS1) et un deuxième signal de données (DS2) (S430) ; et
le fait de commander, par un module de détection (300), un multiplexeur (400) pour sortir de manière sélective le premier signal de données (DS1) ou le deuxième signal de données (DS2) sur la base d'un résultat de détection selon un premier signal d'état (ST1) et un deuxième signal d'état (ST2) générés par des amplificateurs électriques respectifs,
le premier signal d'état (ST1) indiquant la présence du premier signal de données (DS1) et le deuxième signal d'état (ST2) indiquant la présence du deuxième signal de données (DS2) (S440).
